# FASCICULE DE BREVET EUROPEEN

(11) **EP 1 888 401 B1**
(45) Date de publication et mention de la délivrance du brevet: **29.07.2009**
(21) Numéro de dépôt: 06764741.2
(22) Date de dépôt: 06.06.2006
(51) Int. Cl.: B64C 25/16

(54) **SYSTÈME D'OUVERTURE ET DE FERMETURE DE TRAPPE POUR CASE DE TRAIN D'ATTERRISSAGE D'UN AÉRONEF**
SYSTEM ZUM ÖFFNEN UND SCHLIESSEN DER KLAPPE EINES GEHÄUSES DES FAHRWERKS EINES FLUGZEUGS
SYSTEM FOR OPENING AND CLOSING THE FLAP OF A CASING FOR THE LANDING GEAR OF AN AIRCRAFT

(30) Priorité: 07.06.2005 FR 0551527
(43) Date de publication de la demande: 20.02.2008
(73) Titulaire: AIRBUS France, 31060 Toulouse Cédex (FR)
(72) Inventeur: REYNES, Didier, F-31200 TOULOUSE (FR)
(74) Mandataire: Lebrette, Camille
(86) Numéro de dépôt international: PCT/FR2006/001281
(87) Numéro de publication internationale: WO 2006/131641

(56) Documents cités:
- GB-A- 713 258
- US-A- 2 406 710
- US-A- 2 548 832
- US-A- 4 412 665
- US-A- 5 482 228

## Description

### Domaine de l'invention

L'invention concerne un système d'ouverture et de fermeture d'une trappe de la case de train d'atterrissage d'un aéronef, permettant une ouverture minimum de la trappe lorsque le train d'atterrissage est sorti.

L'invention trouve des applications dans le domaine de l'aéronautique et, en particulier, dans le domaine des trappes de fermeture de la case de train d'un aéronef.

### Etat de la technique

Une case de train d'atterrissage est un logement destiné à recevoir un train d'atterrissage d'un aéronef, notamment lorsque le train d'atterrissage est placé sous le fuselage de l'aéronef. Cette case de train est fermée généralement par une ou plusieurs trappes. Il existe plusieurs sortes de trappes :
- les trappes principales qui s'ouvrent pour permettre la descente du train et se referment lorsque le train est sorti, et
- les trappes secondaires, par exemple les trappes de train avant, qui s'ouvrent pour permettre la descente du train et restent ouvertes tant que le train est sorti.

Une trappe de train d'atterrissage, appelée plus simplement trappe de train, comprend habituellement un panneau, fixé sur des bras d'articulation. Généralement, ces bras d'articulation sont articulés sur la structure de l'aéronef, autour d'un axe de pivotement décalé vers l'intérieur de la case de train par rapport au panneau. Lors de la sortie du train d'atterrissage, le pivotement du panneau vers l'extérieur du fuselage est obtenu au moyen d'une bielle placée entre le panneau et la structure, à l'intérieur de la case de train.

Pour préserver l'aérodynamisme du fuselage, l'agencement de l'axe de pivotement est réalisé à l'intérieur de la case de train. Egalement pour des raisons d'aérodynamisme, les trappes secondaires doivent avoir la plus petite ouverture possible pour permettre le passage du train d'atterrissage tout en préservant la continuité aérodynamique.

Actuellement, chaque trappe secondaire est reliée au train d'atterrissage par une liaison directe. Cette liaison directe consiste en une bielle fixée, d'une part, sur le train d'atterrissage, par exemple sur la jambe de train ou sur la contrefiche, et d'autre part, sur la trappe. Cette bielle permet une manoeuvre de la trappe directement en fonction des mouvements du train d'atterrissage. Ainsi, lors de la rentrée du train d'atterrissage, le fait même que le train d'atterrissage remonte dans la case de train assure la fermeture de la trappe. Parallèlement, lors de la sortie du train d'atterrissage, cette liaison directe permet l'ouverture de la trappe en poussant ladite trappe vers l'extérieur du fuselage. Plus précisément, lors de la sortie du train, celui-ci tourne autour d'un axe, entraînant un mouvement de translation de la bielle qui pousse la trappe dans sa position ouverte. Une telle liaison directe permet donc de commander en même temps la sortie du train d'atterrissage et l'ouverture de la trappe.

Des exemples de systèmes d'ouverture et de fermeture de trappe de train sont décrits dans les documents GB 713 258 A (correspondant au préambule de la revendication 1) et US-A- 2 406 710.

Pour un aéronef de grandes dimensions, le train d'atterrissage est de plus grandes dimensions qu'un train d'atterrissage pour aéronef de taille classique. De ce fait, la case de train est plus grande, et notamment plus longue, ce qui nécessite l'utilisation de trappes de plus grandes dimensions, et/ou un plus grand nombre de trappes, primaires et secondaires, pour assurer la fermeture de la case de train.

L'augmentation du nombre de trappes entraîne la présence d'un plus grand nombre de systèmes d'ouverture et de fermeture de ces trappes, donc une augmentation du volume et de la masse des trappes. De plus, l'augmentation du nombre de trappes augmente les risques de défaillance d'un système d'ouverture et de fermeture d'une trappe.
L'augmentation de la taille des trappes entraîne une augmentation de la masse de chaque trappe et une modification du centre de gravité. Or, l'installation d'une bielle de commande classique sur une trappe de grandes dimensions ne peut se faire que près du bord arrière de la trappe, c'est-à-dire à une extrémité de la trappe et non au centre de la trappe. En effet, la bielle ne peut pas être installée au centre de la trappe car, lorsque le train d'atterrissage sort ou rentre, il y a interférence entre la bielle et le train d'atterrissage, c'est-à-dire que la bielle serait entraînée dans un mouvement tel que la trappe serait d'abord poussée puis tirée. Cette interférence est due aux différents mouvements du train d'atterrissage pour rentrer et sortir. L'installation de la bielle à une extrémité de la trappe a pour conséquence qu'une grande partie de la trappe est libre, c'est-à-dire non maintenue, et que, par conséquent, elle est soumise à des vibrations dues aux mouvements de l'aéronef. De plus, pour que l'ouverture de la trappe soit suffisante pour permettre le passage du train d'atterrissage, il faut un angle d'ouverture de la trappe relativement grand, ce qui nécessite l'utilisation de ferrures d'attache de la trappe sur la structure avec un grand angle de débattement, par exemple des cols de cygnes de grandes dimensions. Or, si le col de cygne est grand, le volume nécessaire pour loger ce col de cygne, lorsque la trappe est fermée, est grand.

### Exposé de l'invention

L'invention a justement pour but de remédier aux inconvénients des techniques décrites précédemment. A cette fin, l'invention propose une trappe pour case de train d'atterrissage d'aéronef avec un système d'ouverture et de fermeture de la trappe comportant deux bielles reliées l'une à l'autre par un moyen d'articulation. L'une de ces bielles est fixée sur le train d'atterrissage, l'autre bielle doit être fixée sur la trappe de la case de train. Les deux bielles sont reliées par un moyen d'articulation. De cette façon, la trappe n'est pas reliée directement au train d'atterrissage. La liaison entre le train et la trappe est indirecte, elle se fait par l'intermédiaire du moyen d'articulation.

Un tel système d'ouverture et de fermeture de trappe a l'avantage de permettre la fixation d'une des bielles à l'emplacement désiré sur la trappe, par exemple, à proximité du centre de gravité de la trappe.

De façon plus précise, l'invention concerne une trappe pour case de train d'atterrissage d'aéronef avec un système d'ouverture et de fermeture de la trappe comportant des moyens de liaison mécaniques entre le train d'atterrissage et la trappe, ces moyens de liaison comportant une première bielle fixée sur le train d'atterrissage et une seconde bielle pour être fixée sur la trappe, **caractérisé en ce que** la première et la seconde bielles sont reliées par l'intermédiaire d'un guignol équipé d'une ferrure de reprise montée de façon mobile sur le guignol et pour etre montée de façon fixe sur la case de train.

L'invention peut comporter également une plusieurs des caractéristiques suivantes :
- le guignol est fixé sur une paroi de la case de train d'atterrissage.
- le guignol est fixé sur un toit de la case de train, par la ferrure de reprise.
- la seconde bielle est fixée à proximité d'un centre de gravité de la trappe.
- la première bielle est fixée sur un axe de rotation du train d'atterrissage.
- le système comporte un moyen de rappel de la trappe.
- la seconde bielle est une bielle à ressort formant moyen de rappel.

### Brève description des dessins

La figure 1 représente, selon une vue en perspective, une trappe avec un système d'ouverture et de fermeture selon l'invention, lorsque le train est rentré.
La figure 2 représente, selon une vue en perspective, le système d'ouverture et de fermeture de trappe de la figure 1, lorsque le train est sorti.
La figure 3 représente une vue latérale de la trappe de l'invention lorsque le train est sorti.
La figure 4 représente une vue latérale de la trappe de l'invention lorsque le train est rentré.

### Description détaillée de modes de réalisation de l'invention

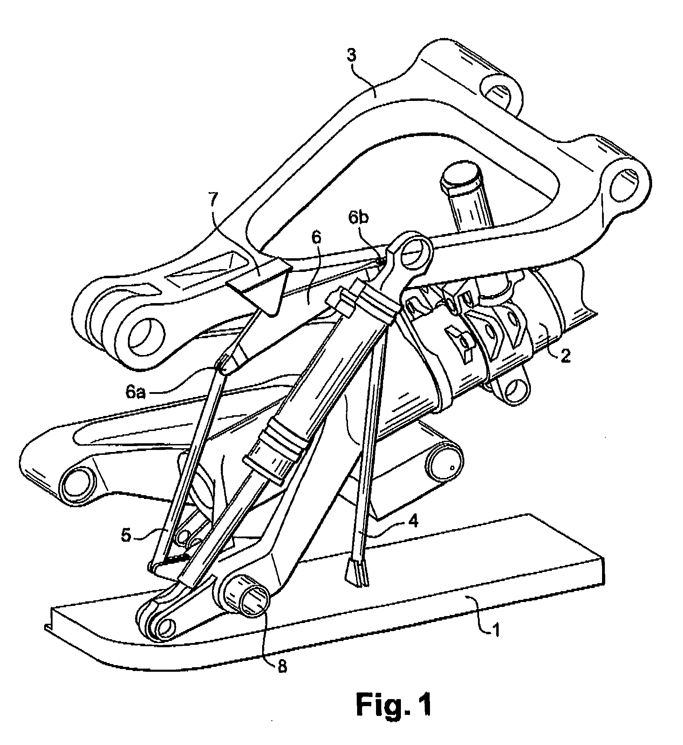

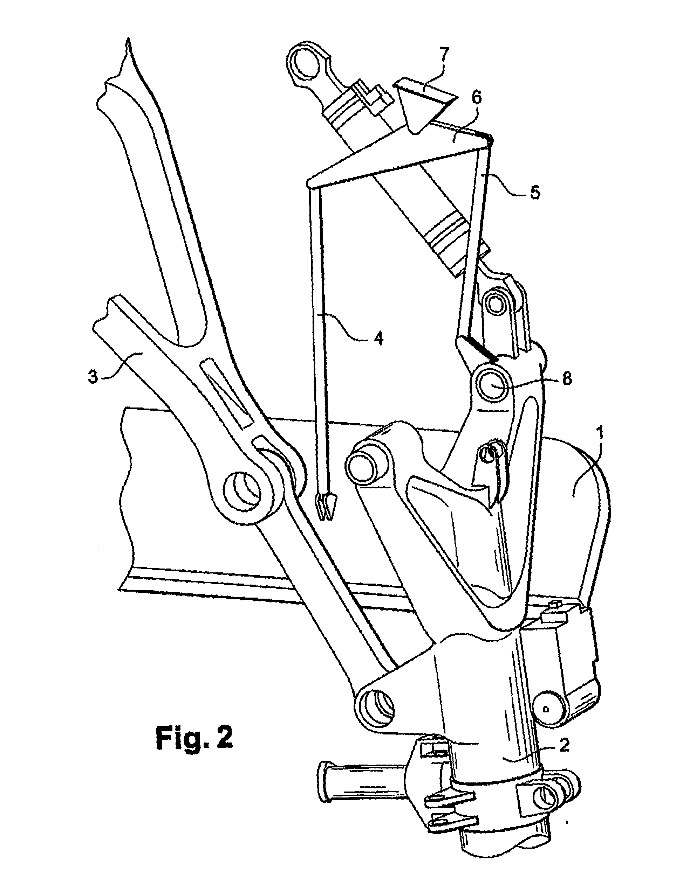

Les figures 1 et 2 montrent des vues en perspective une trappe avec un système d'ouverture et de fermeture selon l'invention, respectivement, lorsque le train d'atterrissage est rentré et lorsqu'il est sorti. Le train d'atterrissage n'a pas été représenté entièrement sur ces figures par mesure de simplification des figures. Dans l'exemple de ces figures, la trappe 1 est une trappe auxiliaire arrière, c'est-à-dire une trappe secondaire de la case de train située à l'arrière de l'aéronef. Cette trappe est destinée à rester ouverte tant que le train d'atterrissage est sorti.

La figure 1 représente le système d'ouverture et de fermeture de la trappe, appelé aussi système d'attache de la trappe, lorsque le train est logé à l'intérieur de la case de train et que la trappe est fermée, c'est-à-dire qu'elle est dans la continuité du fuselage de l'aéronef. Sur cette figure 1, on voit la jambe de train 2 ainsi que la contrefiche 3, ou barre de train, qui sont des éléments classiques des trains d'atterrissage. L'invention concerne le système d'attache de la trappe sur le train.

Ce système d'attache, selon l'invention, comporte une première bielle 4, appelée bielle de trappe, et une seconde bielle 5, appelée bielle de train. La bielle de trappe 4 est fixée, par une première extrémité, sur la trappe 1 de la case de train. Elle peut être fixée à différents emplacements de la trappe 1. De préférence, elle est fixée au milieu de la trappe 1, c'est-à-dire approximativement à l'emplacement du centre de gravité de la trappe, afin de limiter les effets des vibrations sur la trappe.

La bielle de train 5 est fixée, par une première extrémité, sur un des éléments du train d'atterrissage. La bielle de train peut être fixée à différents endroits du train d'atterrissage, par exemple sur la jambe de train 2 ou sur la contrefiche 3. Dans l'exemple de la figure 1, elle est fixée sur la jambe de train 2, notamment sur un axe de rotation 8 de la jambe de train, afin de limiter la course des bielles.

Les bielles de trappe 4 et de train 5 sont reliées l'une à l'autre par l'intermédiaire d'un moyen d'articulation 6. Plus précisément, la seconde extrémité de la bielle de trappe 4 est reliée à la seconde extrémité de la bielle de train 5 par ce moyen d'articulation, qui assure une liaison mobile entre les deux bielles.

Dans un mode de réalisation préféré de l'invention, le moyen d'articulation 6 est un guignol. Un guignol est une pièce en matériau rigide apte à transmettre un mouvement entre deux pièces. Selon un mode de réalisation de l'invention, ce guignol 6 est une pièce triangulaire comportant, à deux de ses extrémités, des embouts de fixation 6a, 6b aptes à recevoir chacune une extrémité d'une bielle. Ces embouts de fixation 6a, 6b peuvent être des rotules permettant, à chacune des bielles, d'avoir un mouvement de rotation par rapport au guignol.

Le guignol 6 est fixé, par son sommet 6c, sur un élément autre que le train d'atterrissage ou la trappe. Il peut être fixé, par exemple, sur la case de train. Dans le mode de réalisation préféré de l'invention, le guignol 6 est fixé sur une paroi de la case de train et, notamment, sur le toit de la case de train, le toit étant par définition la paroi située en regard de la trappe 1.

Le sommet 6c du guignol est équipé d'une attache 7, appelée ferrure de reprise du guignol. Cette ferrure de reprise 7 est montée de façon mobile sur le guignol et de façon fixe sur la case de train. De cette façon, le guignol 6 est mobile en rotation par rapport à la case de train, de sorte qu'il peut transmettre les mouvements reçus par une bielle vers l'autre bielle. Ainsi, lorsque le train d'atterrissage effectue un mouvement, la bielle de train 5 reçoit ce mouvement et le transmet au guignol 6. Le guignol 6, par un jeu de rotations, transmet le mouvement inverse à la bielle de trappe 4 qui, à son tour, transmet ce mouvement inverse à la trappe 1.

Sur la figure 2, on a représenté le système d'attache de la figure 1 dans le cas où le train d'atterrissage est sorti. Dans l'exemple de la figure 2, la trappe 1 est dans une position ouverte, c'est-à-dire sensiblement verticale par rapport au fuselage de l'aéronef. On voit, sur cette figure 2, la contrefiche 3 ainsi que la jambe de train 2 dans la position dépliée du train d'atterrissage. Cette figure 2 montre que la bielle de train 5 est poussée vers le haut, le guignol est basculé, par rapport à la figure 1, et la bielle de trappe 4 est poussée vers le bas. La trappe est donc poussée dans sa position ouverte par la bielle de trappe 4.

Comme on le voit dans les exemples des figures 1 et 2, le guignol 6 a une forme sensiblement triangulaire. A chaque extrémité de l'hypoténuse de ce triangle, est fixée une bielle. Au sommet de ce triangle, est fixée la ferrure de reprise 7. Les longueurs des côtés du triangle du guignol 6 dépendent des emplacements de fixation des bielles 4 et 5 sur la trappe et, sur le train, de la cinématique et des efforts à transmettre entre ces bielles.

Ainsi, partant de la position de la figure 1 (train rentré) pour aller dans la position de la figure 2 (train sorti), le système d'attache de l'invention permet la série de mouvements suivante :
- le train commence à se déplier, ce qui entraîne un déplacement de la bielle de train 5 vers le toit de la case de train,
- le guignol 6 reçoit ce déplacement et effectue une rotation autour de la ferrure de reprise 7,
- par cette rotation et par les rotations par rapport aux bielles 4 et 5, le guignol 6 transmet un déplacement vers la trappe à la bielle de trappe 4,
- ce déplacement de la bielle 4 a pour effet de pousser la trappe 1 vers l'extérieur de l'aéronef.

Pour passer de la position de train sorti à la position de train rentré, les mouvements réalisés par le système d'attache de l'invention sont simplement inversés par rapport à ceux qui viennent d'être décrits.

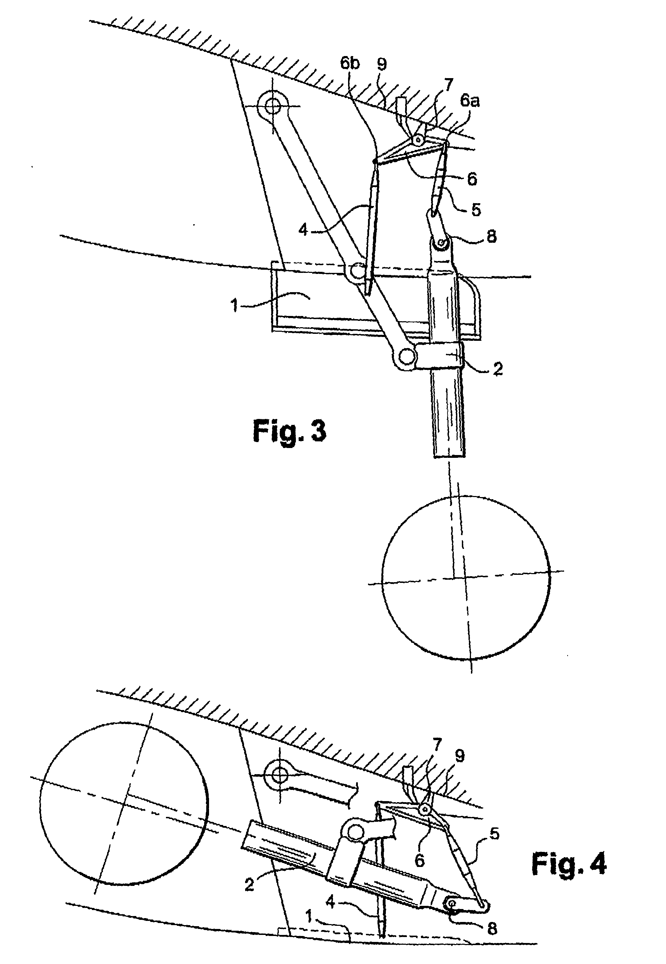

La figure 3 représente un plan selon une vue latérale du système d'attache de l'invention, lorsque le train est sorti. Cette figure 3 montre bien la ferrure de reprise 7 fixée sur le toit 9 de la case de train et le guignol 6 mobile en rotation autour de cette ferrure de reprise 7. On comprend que la ferrure d'attache 7 permet une liberté de mouvement bidimensionnelle du guignol 6 dans la case de train. Autrement dit, la rotation du guignol 6 autour de la ferrure de reprise 7 est réalisée dans un plan. On comprend également, par cette figure 3, que le mouvement de la bielle de train 5 entraîne une rotation du guignol 6, qui entraîne à son tour une translation de la bielle de trappe 4. Dans l'exemple de la figure 3, la bielle de train 5 est fixée sur l'axe de rotation 8 de la jambe de train. Cette bielle de train 5 pourrait aussi être fixée à d'autres endroits du train d'atterrissage, en particulier aux pièces du train d'atterrissage qui subissent le mouvement de sortie et de rentrée du train d'atterrissage, de façon à transmettre ce mouvement au guignol 6.

La figure 4 représente un plan selon une vue latérale du système d'attache de l'invention, lorsque le train d'atterrissage est rentré. On comprend, en comparant cette figure 4 à la figure 3, que la remontée du train d'atterrissage vers la case de train a pour effet de faire descendre la bielle de train 5 vers la trappe, ce qui a pour effet d'impliquer au guignol un mouvement de rotation. Ce mouvement du guignol 6 a pour effet de faire remonter la bielle de trappe 4 vers le toit 9 de case de train, tirant ainsi la trappe vers sa position fermée.

Comme expliqué précédemment, la taille du guignol, notamment la longueur des cotés du guignol, ainsi que la longueur des bielles 4 et 5 peuvent être adaptées à la taille de la trappe et à l'emplacement de fixation de la bielle de trappe et de la bielle de train. Ce dispositif d'attache permet ainsi de choisir l'emplacement idéal, sur la trappe, pour fixer la bielle de trappe. Pour limiter les effets des vibrations, on peut choisir de fixer la bielle de trappe à proximité du centre de gravité de la trappe, équilibrant ainsi la reprise des efforts sur la trappe.

Dans une variante de l'invention, le système d'attache de l'invention peut comporter des moyens pour éviter les problèmes d'un affleurement dû à la pression aérodynamique exercée sur la trappe ainsi qu'aux déformations de structure liées à la pression de la cabine exercée sur la case de train. En effet, lorsque le train est dans sa position rentrée, du fait de la déformation de l'attache du train sur le toit de la case de train provoquée par la pressurisation de la cabine, le train a tendance à s'affaisser quelque peu dans la case de train ; la trappe a alors tendance à s'ouvrir sensiblement et, par conséquent, à désaffleurer du fuselage. L'invention propose de résoudre ce problème de désaffleurement de la trappe en vol par un moyen de rappel de la trappe. Ce moyen de rappel a pour rôle de plaquer la trappe dans sa position de fermeture pour éviter que la trappe ne désaffleure.

Ce moyen de rappel peut être installé sur la bielle de trappe 4 ou 5. Ce peut être une bielle élastique, par exemple une bielle équipée d'un ressort interne permettant une modification de la longueur de la bielle ou bien une bielle équipée d'une série de rondelles montées tête-bêche pour assurer une compression de la bielle.

La bielle élastique est installée avec une longueur initiale plus faible que la longueur théorique. Ainsi, lorsque la trappe se ferme et vient en contact sur ses butées, la bielle s'allonge en comprimant son ressort. En vol, lors de l'affaissement du train, la bielle se raccourcit sous l'effort du ressort et vient ainsi compenser l'affaissement du train ainsi que du guignol et de la cinématique de commande.

## Revendications

1. Trappe (1) pour case de train d'atterrissage d'un aéronef avec un système d'ouverture et de fermeture de la trappe comportant des moyens de liaison mécaniques entre le train d'atterrissage et la trappe, ces moyens de liaison comportant une première bielle (5) pour être fixée sur le train d'atterrissage et une seconde bielle (4) fixée sur la trappe (1),
**caractérisée en ce que** la première et la seconde bielles sont reliées par l'intermédiaire d'un guignol (6) équipé d'une ferrure de reprise (7) montée de façon mobile sur le guignol et pour être montée de façon fixe sur la case de train.

2. Trappe selon la revendication 1, **caractérisée en ce que** le guignol (6) est fixé sur une paroi de la case de train d'atterrissage.

3. Trappe selon la revendication 1 ou 2, **caractérisée en ce que** le guignol est fixé sur un toit (9) de la case de train, par la ferrure de reprise (7).

4. Trappe selon l'une quelconque des revendications 1 à 3, **caractérisée en ce que** la seconde bielle est fixée à proximité d'un centre de gravité de la trappe.

5. Trappe selon l'une quelconque des revendications 1 à 4, **caractérisée en ce que** la première bielle est fixée sur un axe de rotation (8) du train d'atterrissage.

6. Trappe selon l'une quelconque des revendications 1 à 5, **caractérisée en ce qu'**il comporte un moyen de rappel de la trappe.

7. Trappe selon la revendication 6, **caractérisée en ce que** la seconde bielle est une bielle à ressort formant moyen de rappel.

## Claims

1. A flap (1) for a landing gear casing of an aircraft with a system for opening and closing the flap comprising mechanical connection means between the landing gear and the flap, said connection means comprising a first connecting rod (5) for fixing it to the landing gear, and a second connecting rod (4) fixed to the flap (1);
**characterised in that** the first and second connecting rods are linked by a bell crank (6) fitted with a pick-up fitting (7) attached in a mobile way onto the bell crank and for being attached in a fixed way on the landing gear casing.

2. A flap according to claim 1, **characterised in that** the bell crank (6) is fixed on a wall of the landing gear casing.

3. A flap according to claim 1 or 2, **characterised in that** the bell crank is fixed to a roof (9) of the landing gear casing by the pick-up fitting (7).

4. A flap according to any one of claims 1 to 3, **characterised in that** the second connecting rod is fixed in the proximity of a centre of gravity of the flap.

5. A flap according to any one of claims 1 to 4, **characterised in that** the first connecting rod is fixed on a rotation axis (8) of the landing gear.

6. A flap according to any one of claims 1 to 5, **characterised in that** it comprises a means for retracting the flap.

7. A flap according to claim 6, **characterised in that** the second connecting rod is a spring connecting rod providing retracting means.

## Patentansprüche

1. Klappe (1) des Fahrwerksgehäuses eines Flugzeugs mit einem System zum Öffnen und Schließen der Klappe mit den entsprechenden mechanischen Verbindungsmitteln zwischen dem Fahrwerk und der Klappe, wobei diese Verbindungsmittel eine erste Kuppelstange (5) enthalten, um am Fahrwerk befestigt zu werden, und eine zweite Kuppelstange (4), die an der Klappe (1) befestigt wird,
**dadurch gekennzeichnet, dass** die erste und die zweite Kuppelstange über einen Umlenkhebel (6) miteinander verbunden sind, der mit einem Verbindungsbeschlag (7) ausgestattet ist, der beweglich auf dem Umlenkhebel montiert ist, um fest am Fahrwerksgehäuse montiert zu werden.

2. Klappe nach Anspruch 1, **dadurch gekennzeichnet, dass** der Umlenkhebel (6) an einer Wand des Fahrwerksgehäuses befestigt ist.

3. Klappe nach Anspruch 1 oder 2, **dadurch gekennzeichnet, dass** der Umlenkhebel mit einem Verbindungsbeschlag (7) auf einer Abdeckung (9) des Fahrwerksgehäuses befestigt ist.

4. Klappe nach irgendeinem der Ansprüche 1 bis 3, **dadurch gekennzeichnet, dass** die zweite Kuppelstange in der Nähe eines Schwerpunktes der Klappe befestigt ist.

5. Klappe nach irgendeinem der Ansprüche 1 bis 4, **dadurch gekennzeichnet, dass** die erste Kuppelstange auf einer Drehachse (8) des Fahrwerks befestigt ist.

6. Klappe nach irgendeinem der Ansprüche 1 bis 5, **dadurch gekennzeichnet, dass** sie ein Mittel zum Rückhub der Klappe enthält.

7. Klappe nach Anspruch 6, **dadurch gekennzeichnet, dass** die zweite Kuppelstange eine Federkuppelstange ist, die ein Mittel zum Rückhub bildet.
